Europäisches Patentamt

European Patent Office

Office européen des brevets

(11) Veröffentlichungsnummer: **0 118 931**
**B1**

# (12) EUROPÄISCHE PATENTSCHRIFT

(45) Veröffentlichungstag der Patentschrift:
02.04.86

(21) Anmeldenummer: 84200123.2

(22) Anmeldetag: 31.01.84

(51) Int. Cl.⁴: **F 23 G 7/06**, **B 01 J 8/38**,
**F 27 D 17/00** // **C21B7/00**,
**C22B1/10**

(54) Verfahren zur Nachverbrennung und Reinigung von Prozessabgasen.

(30) Priorität: 05.03.83 DE 3307848

(43) Veröffentlichungstag der Anmeldung:
19.09.84 Patentblatt 84/38

(45) Bekanntmachung des Hinweises auf die Patenterteilung:
02.04.86 Patentblatt 86/14

(84) Benannte Vertragsstaaten:
AT BE DE FR GB IT LU NL SE

(56) Entgegenhaltungen:
DE - A - 2 262 915
DE - A - 2 624 302
GB - A - 1 024 200
GB - A - 1 076 016
GB - A - 2 026 458
US - A - 4 103 646

(73) Patentinhaber: METALLGESELLSCHAFT AG,
Reuterweg 14 Postfach 3724, D-6000 Frankfurt/M.1 (DE)

(72) Erfinder: Hirsch, Martin, Römerstrasse 7,
D-6382 Friedrichsdorf (DE)
Erfinder: Schnabel, Wolfram, Dr.,
Thomas-Mann-Strasse 7, D-6270 Idstein (DE)
Erfinder: Sauer, Harald, Dr., Ziegenhainer Strasse 205,
D-6000 Frankfurt am Main (DE)
Erfinder: Schmidt, Hans-Werner, Dr., Hasselhorstweg 9,
D-6000 Frankfurt am Main (DE)

(74) Vertreter: Fischer, Ernst, Dr., Reuterweg 14,
D-6000 Frankfurt am Main 1 (DE)

ACTORUM AG

## Beschreibung

Die Erfindung betrifft ein Verfahren zur Nachverbrennung und Reinigung von brennbare Bestandteile enthaltenden Prozessabgasen.

Bei verschiedenen Prozessen, wie der Durchführung hüttenmännischer Verfahren in Drehrohröfen, z.B. der magnetisierenden Röstung von Eisenerzen und insbesondere der Direktreduktion von Eisenerzen zu Eisenschwamm, fallen Abgase an, die noch brennbare Bestandteile enthalten. Die brennbaren Bestandteile bestehen je nach angewendetem Verfahren hauptsächlich aus CO, $H_2$, Kohlenwasserstoffen und vom Gas mit gerissenem festem Kohlenstoff (Russ) oder Staub, z.B. in Form von Eisenoxid. Relativ hoch ist der Gehalt an brennbaren Bestandteilen, wenn Kohlen mit einem hohen Anteil an flüchtigen Bestandteilen eingesetzt werden. Insbesondere zur Vermeidung von Umweltbelästigungen müssen die brennbaren Bestandteile nachverbrannt werden und die Stäube sowie Schadstoffe aus dem Abgas entfernt werden.

Aus der US-A-2112566 ist es bekannt, das gesamte Abgas eines Drehrohrofens oder einen Teilstrom durch einstufige Zugabe von Luft vollständig nachzuverbrennen und dann durch ein Materialbett auf einen Wanderrost zu leiten. Durch die einstufige vollständige Nachverbrennung wird die Temperatur des Gases so stark erhöht, dass die Ausmauerung der Nachverbrennungskammer thermisch stark angegriffen wird, und dass der Schmelz- oder Erweichungspunkt des Flugstaubes erreicht wird, so dass sich Ansätze bilden.

Aus der DE-A-2001563 ist es bekannt, direkt im Anschluss an das Gasaustrittsende eines Drehrohrofens einen rohrwandgekühlten Abgaskanal anzuordnen, der in den Strahlungsraum eines Abhitzekessels einmündet. Kurz vor dem Strahlungsteil werden sauerstoffhaltige Gase eingeleitet, die eine vollständige Nachverbrennung bewirken. Ein Teilstrom des vollständig nachverbrannten Gases wird aus dem Abhitzekessel nach einer Abkühlung auf eine Temperatur unterhalb der Anbackungstemperatur der enthaltenen Feststoffe abgeleitet und zur Aufheizung der Beschickung auf einem Wanderrost verwendet. Damit kann zwar die Bildung von Ansätzen weitgehend vermieden werden, es ist aber auf jeden Fall ein direkt nachgeschalteter Abhitzekessel und damit ein beträchtlicher Aufwand erforderlich. Ausserdem muss im Strahlungsteil auf laminare Strömung geachtet werden, damit keine erweichten Feststoffe an die Wandung gelangen und zu Ansätzen führen.

Aufgabe der Erfindung ist es, ein Verfahren zur Nachverbrennung und Reinigung von Prozessabgasen bereitzustellen, das die Nachteile der bekannten, insbesondere vorgenannten Verfahren vermeidet und — verglichen mit herkömmlichen Verfahren — ohne zusätzlichen Aufwand durchführbar ist.

Die Aufgabe wird gelöst, indem das Verfahren der eingangs genannten Art entsprechend der Erfindung derart ausgestaltet wird, dass man die Prozessabgase und die zur Verbrennung erforderlichen sauerstoffhaltigen Gase getrennt in den Wirbelschichtreaktor einer zirkulierenden Wirbelschicht einleitet, darin bei einer Gasgeschwindigkeit von 2 bis 10 m/s (Leerrohrgeschwindigkeit) in Gegenwart von Gasreinigungsmittel enthaltendem Feststoff, der eine Teilchengrösse $d_p$ 50 von 30 bis 200 µm aufweist, und unter Einstellung einer mittleren Suspensionsdichte von 0,1 bis 10 kg/m³ und einer Temperatur von 700 bis 1100°C verbrennt und gleichzeitig reinigt, ein stöchiometrisches Verhältnis von Gasreinigungsmittel zu im Prozessabgas enthaltenem oder infolge Verbrennung gebildetem Schadstoff von 1,2 bis 3,0 (berechnet als Ca:S) einstellt und die mit den Gasen aus dem Wirbelschichtreaktor ausgetragenen Feststoffe derart in den Wirbelschichtreaktor zurückleitet, dass innerhalb der zirkulierenden Wirbelschicht der stündliche Feststoffumlauf mindestens das 5fache des im Wirbelschichtreaktor befindlichen Feststoffgewichtes ausmacht.

Die vorstehend genannte Gasgeschwindigkeit von 2 bis 10 m/s, die als sogenannte Leerrohrgeschwindigkeit definiert ist, bezieht sich auf die in einem von Feststoffen freien Wirbelschichtreaktor gegebene Geschwindigkeit.

Das bei der Erfindung angewendete Wirbelschichtprinzip zeichnet sich dadurch aus, dass — im Unterschied zur klassischen Wirbelschicht, bei der eine dichte Phase durch einen deutlichen Dichtesprung von dem darüber befindlichen Gasraum getrennt ist — Verteilungszustände ohne definierte Grenzschicht vorliegen. Ein Dichtesprung zwischen dichter Phase und darüber befindlichem Staubraum ist nicht existent; jedoch nimmt innerhalb des Reaktors die Feststoffkonzentration von unten nach oben ständig ab.

Bei der Definition der Betriebsbedingungen über die Kennzahlen von Froude und Archimedes ergeben sich die Bereiche:

$$0,1 \leqslant \tfrac{3}{4} \cdot F_r{}^2 \cdot \frac{\rho g}{\rho k - \rho g} \leqslant 10,$$

bzw.    $0,01 \leqslant Ar = 100,$

wobei   $Ar = \dfrac{d_k{}^3 \cdot g(\rho k - \rho g)}{\rho g \cdot v^2}$ und

$$F_r{}^2 = \frac{u^2}{g \cdot d_k}$$

sind.

Es bedeuten:

u    die relative Gasgeschwindigkeit in m/s
Ar   die Archimedeszahl
$F_r$   Froudezahl
$\rho g$  die Dichte des Gases in kg/m³
$\rho k$  die Dichte des Feststoffteilchens in kg/m³
$d_k$  den Durchmesser des kugelförmigen Teilchens in m
v    die kinematische Zähigkeit in m²/s
g    die Gravitationskonstante in m/s²

Das erfindungsgemässe Verfahren zeichnet sich dadurch aus, dass die kombinierte Verbrennung und Gasreinigung bei hohen Gasdurchsätzen und bei sehr konstanter Temperatur durchgeführt werden kann. Die hohe einhaltbare Temperaturkonstanz wirkt sich für die der Gasreinigung dienenden Gasreinigungsmittel insofern positiv aus, als diese ihre Aktivität und damit ihr Aufnahmevermögen gegenüber Schadstoffen behalten. Die hohe Feinkörnigkeit der Gasreinigungsmittel ergänzt diesen Vorteil, da das Verhältnis von Oberfläche zu Volumen für die im wesentlichen durch die Diffusionsgeschwindigkeit bestimmte Bindungsgeschwindigkeit der Schadstoffe besonders günstig ist. Aufgrund der Feinkörnigkeit der Feststoffe insgesamt ist auch eine schnelle und gleichmässige Temperaturverteilung in der zirkulierenden Wirbelschicht gewährleistet.

Als Schadstoffe sind insbesondere Schwefelverbindungen, wie Schwefelwasserstoff oder Schwefeldioxid, die mit den die Prozessabgase liefernden Energieträgern, wie Heizöl oder Kohle, eingebracht werden, anzusehen. In untergeordnetem Masse können auch Chlor- oder Fluorwasserstoff bei Mitverwendung von z.B. Altreifen als Energieträger in Betracht kommen.

Der Eintrag der Prozessabgase und der sauerstoffhaltigen Verbrennungsgase in den Wirbelschichtreaktor erfolgt an unterschiedlichen Stellen. Dabei kann das Prozessabgas als Fluidisierungsgas und das sauerstoffhaltige Verbrennungsgas in eine über dem Eintrag des Prozessabgases liegende Ebene eingetragen werden. Hierbei kann der Eintrag des sauerstoffhaltigen Verbrennungsgases über mehrere durch eine Ringleitung miteinander verbundene Gaslanzen vorgenommen werden. Auch ist eine Zuführung der sauerstoffhaltigen Verbrennungsgase in z.B. zwei Ebenen möglich.

Bei einer anderen Ausführungsform werden die sauerstoffhaltigen Verbrennungsgase als Fluidisierungsgas und die Prozessabgase in analoger, wie vorstehend näher beschriebener Weise in mindestens einer Ebene zugeleitet.

Die in der zirkulierenden Wirbelschicht befindlichen Feststoffe können ausschliesslich aus Gasreinigungsmitteln bestehen. Je nach Herkunft der Prozessabgase und der sauerstoffhaltigen Verbrennungsgase kann der Feststoff jedoch auch erhebliche Mengen von mit diesen Gasen herangeführten Stäuben enthalten. Der der eigentlichen Gasreinigung dienende Feststoffanteil (Gasreinigungsmittel) sollte jedoch 10 Gew.-% nicht unterschreiten.

Als Gasreinigungsmittel kommen insbesondere Kalkstein und Dolomit in Betracht.

Bei der Dosierung entsprechend den oben genannten stöchiometrischen Verhältnissen ist zu berücksichtigen, dass bei Verwendung von z.B. Dolomit praktisch nur die Calciumcarbonatkomponente mit den Schadstoffen, insbesondere den Schwefelverbindungen, reagiert und das stöchiometrische Verhältnis von 1,2 bis 3,0 nur auf den Calciumanteil zu berechnen ist.

Der der Durchführung des erfindungsgemässen Verfahrens dienende Wirbelschichtreaktor kann von rechteckigem, quadratischem oder kreisförmigem Querschnitt sein. Der untere Bereich des Wirbelschichtreaktors kann auch konisch ausgebildet sein, was insbesondere bei grossen Reaktorquerschnitten und damit hohen Gasdurchsätzen von Vorteil ist. Besonders zweckmässig ist es, die Fluidisierungsgase — entweder die Prozessabgase oder die sauerstoffhaltigen Verbrennungsgase — über eine venturidüsenartige Eintragsvorrichtung dem Wirbelschichtreaktor zuzuführen. Sofern eines der Gase staubhaltig ist, wird es bevorzugt als Fluidisierungsgas eingetragen.

Der Eintrag der Gasreinigungsmittel in den Wirbelschichtreaktor erfolgt auf übliche Weise, am zweckmässigsten über eine oder mehrere Lanzen, z.B. durch pneumatisches Einblasen. Infolge der bei zirkulierenden Wirbelschichten gegebenen guten Quervermischung genügt eine vergleichsweise geringe Zahl.

Besonders günstige Betriebsbedingungen werden erzielt, wenn die Mengen an Prozessabgas und sauerstoffhaltigem Verbrennungsgas in der Weise aufeinander abgestimmt werden, dass das entstehende Rauchgas im Wirbelschichtreaktor eine Geschwindigkeit von 4 bis 8 m/s erhält und in diesem sich eine mittlere Suspensionsdichte von 0,2 bis 2 kg/m³ einstellt.

Eine vorteilhafte Ausführungsform der Erfindung sieht weiterhin vor, die mit den Gasen aus dem Wirbelschichtreaktor ausgetragenen Feststoffe derart in den Wirbelschichtreaktor zurückzuleiten, dass innerhalb der zirkulierenden Wirbelschicht der stündliche Feststoffumlauf mindestens das Einhundertfache des im Wirbelschichtreaktor befindlichen Feststoffgewichtes ausmacht. Diese Arbeitsweise hat den Vorzug, dass der Wirbelschichtreaktor mit sehr geringem Druckverlust betrieben werden kann.

Die hinsichtlich Gasreinigung optimalen Bedingungen werden erhalten, wenn in weiterer vorteilhafter Ausgestaltung der Erfindung in der zirkulierenden Wirbelschicht eine Temperatur von 800 bis 1050° C eingestellt wird.

Sofern die zu verbrennenden und zu reinigenden Prozessabgase mit einer Temperatur anfallen, die bei der Nachverbrennung zu Rauchgasen mit einer Temperatur oberhalb von 1100° C führen würden, ist eine Kühlung des Wirbelbettes erforderlich. Im einfachsten Fall kann die Kühlung durch Eindüsen von Wasser in den Wirbelschichtreaktor erfolgen.

Eine vorteilhafte Ausgestaltung der Erfindung sieht jedoch vor, die Temperatur der zirkulierenden Wirbelschicht durch Eintrag von in einem Wirbelschichtkühler gekühltem Feststoff einzustellen. Hierzu wird dem aus Wirbelschichtreaktor, Rückführzyklon und Rückführleitung gebildeten Kreislauf Feststoff entnommen, in einem Wirbelschichtkühler, vorzugsweise einem solchen mit mehreren nacheinander durchflossenen Kühlkammern, in die miteinander verbundene Kühlregister eintauchen und in denen das Kühlmittel im Gegenstrom zum Feststoff fliesst, gekühlt und danach in den vorgenannten Kreislauf zurückgeführt. Die bei der Kühlung abgeführte Wärmemenge dient vorzugsweise der Erzeugung von Prozesswärme, z.B. in Form von Dampf oder aufgeheizten Wärmeträgersalzen oder -ölen.

Die in das erfindungsgemässe Verfahren einzusetzenden Prozessabgase mit brennbaren Bestandteilen haben üblicherweise einen niedrigen Heizwert von z.B. max. 4000 kJ/m³$_N$. Sie können gegebenenfalls auch mit Staub oder Russ beladen sein. Derartige Prozessabgase können z.B. aus mit festen kohlenstoffhaltigen Materialien arbeitenden Direktreduktionsverfahren (Feststoffreduktion) stammen. Es kann sich aber auch um Fackelgase aus Raffinerien oder Ölbohrungen handeln.

Für den Fall, dass die Prozessabgase von der Feststoffreduktion herrühren, sieht eine weitere vorteilhafte Ausführungsform vor, die Abgase der üblicherweise an gleicher Stelle befindlichen Pelletbrennmaschine oder des Sinterbandes als sauerstoffhaltiges Verbrennungsgas einzusetzen. Sofern nur ein Abgasteilstrom einsetzbar ist, ist die Verwendung des Anteils mit den höchsten Schadstoffgehalten zweckmässig. Eine separate Schadstoffentfernung für diesen Abgasstrom kann dann entfallen.

Schliesslich besteht eine vorteilhafte Ausführungsform der Erfindung darin, die Menge des sauerstoffhaltigen Verbrennungsgases derart zu bemessen, dass ein Rauchgas mit einem Sauerstoffgehalt von 2 bis 10 Vol.-% entsteht. Hierdurch wird eine optimale Schadstoffbeseitigung bei gleichzeitig hohem Ausnutzungsgrad des Gasreinigungsmittels erzielt. Bei Verwendung von Kalkstein oder Dolomit als Gasreinigungsmittel ist zudem ein hoher Sulfatisierungsgrad erreichbar.

Die herausragenden Vorteile des erfindungsgemässen Verfahrens liegen insbesondere darin, dass sowohl Verbrennung als auch Reinigung der Prozessabgase in einer Vorrichtung durchgeführt werden können, dass der Verbrennungsvorgang auch bei nur geringen Anteilen brennbarer Bestandteile einwandfrei geführt werden kann, d.h. unter Voraussetzungen, unter denen übliche Nachverbrenneinrichtungen nicht mehr oder nur mit Schwierigkeiten betrieben werden können. Bevorzugte Ausgestaltungen der Erfindung schaffen zusätzlich die Möglichkeit, Abgase aus anderen Vorrichtungen mit zu verarbeiten und damit eine separate Behandlung überflüssig zu machen bzw. die in den Prozessabgasen enthaltene minderwertige Energie noch nutzbringend zu verwerten.

Die Erfindung wird anhand der Figuren beispielsweise und näher erläutert.

Fig. 1 veranschaulicht schematisch die Verfahrensführung in der Ausgestaltung mit Kühlung des aus dem Zirkulationssystem ausgeschleusten Feststoffes und erneuter Rückführung in die zirkulierende Wirbelschicht.

Fig. 2 zeigt das Fliessschema einer Verbundschaltung zwischen Nachverbrennung des Prozessabgases einer Feststoffreduktion mit gleichzeitiger Schadstoffentfernung einerseits und einer Pelletbrennmaschine andererseits.

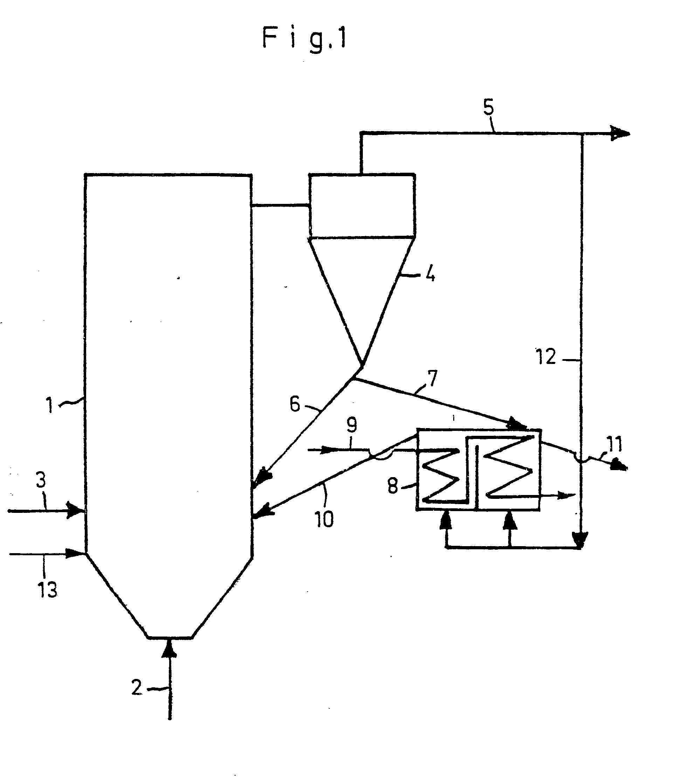

Ein in Fig. 1, dargestellter Wirbelschichtreaktor 1 wird über Leitung 2 mit Prozessabgas und über Leitung 3 mit Gasreinigungsmittel beaufschlagt.

Über Leitung 13 wird sauerstoffhaltiges Verbrennungsgas zugeführt. Innerhalb des Wirbelschichtreaktors 1 bildet sich eine den gesamten Wirbelschichtreaktor ausfüllende Gas/Feststoff-Suspension aus, die am Reaktorkopf ausgetragen und in einen Rückführzyklon 4 zur Trennung von Gas und Feststoff geleitet wird. Das verbrannte und gereinigte Prozessabgas verlässt den Rückführzyklon 4 über Leitung 5.

Ein Teil des Feststoffes wird über Rückführleitung 6 in den Wirbelschichtreaktor 1 zurückgeführt. Ein weiterer Teilstrom gelangt über Leitung 7 in einen Wirbelschichtkühler 8, wird dort gegen durch Kühlregister 9 geführtes Wasser gekühlt und gelangt dann über Leitung 10 in den Wirbelschichtreaktor 1 zurück. Ein dem Eintrag von frischem Gasreinigungsmittel und gegebenenfalls Staub entsprechender Teil Feststoff wird über Leitung 11 abgeführt. Der Wirbelschichtkühler 8 wird mit über Leitung 12 aus dem Rauchgas zugeführtem Gas fluidisiert, das nach Durchgang gemeinsam mit dem gekühlten Feststoff in den Wirbelschichtreaktor 1 zurückgeführt wird.

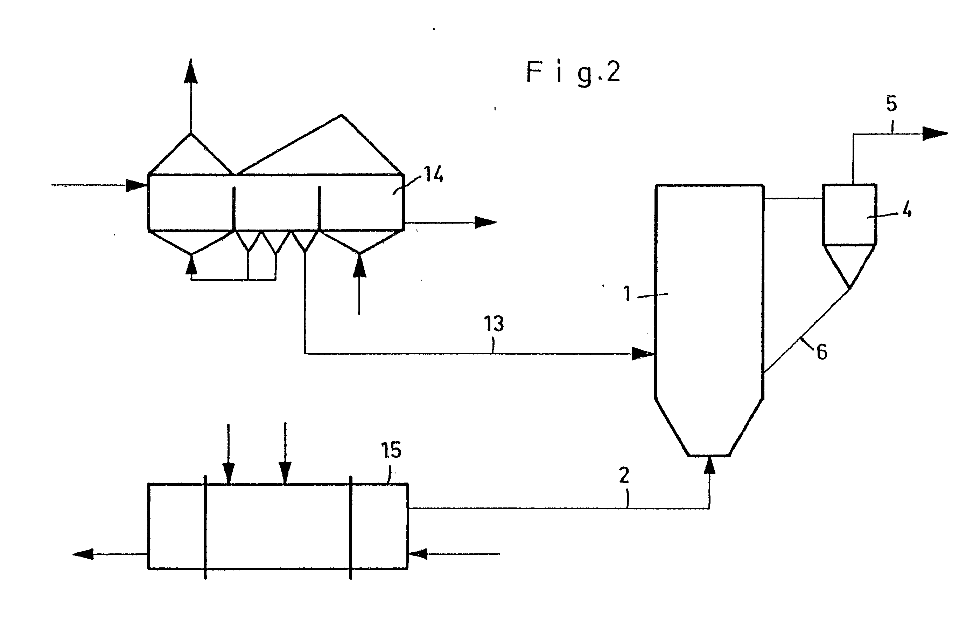

In Fig. 2 sind eine Pelletbrennmaschine mit 14, eine Feststoffreduktion mit 15 und eine zirkulierende Wirbelschicht — entsprechend Fig. 1 — mit 1, 4, 6 bezeichnet.

Aus der Feststoffreduktion treten die Prozessabgase über Leitung 2 in den Wirbelschichtreaktor 1 ein und werden dort mit über Leitung 13 aus der Pelletbrennmaschine 14 herangeführtem sauerstoffhaltigem Verbrennungsgas verbrannt. Gleichzeitig erfolgt die Reinigung der entstehenden Rauchgase. Der aus der Pelletbrennmaschine 14 herangeführte Teilstrom sauerstoffhaltiger Gase enthält praktisch die gesamten, beim Pelletbrennprozess gebildeten Schadstoffe. Die gereinigten Rauchgase verlassen über Leitung 5 die zirkulierende Wirbelschicht.

*Beispiel*

In einer Feststoffreduktionsanlage 15 zur Herstellung von Eisenschwamm fielen stündlich 67 000 m³$_N$ Prozessabgas an, das die Zusammensetzung

|  |  |
|---|---|
| 2,3 Vol.-% CO | 14,3 Vol.-% $H_2O$ |
| 1,1 Vol.-% $H_2$ | 63,9 Vol.-% $N_2$ |
| 18,3 Vol.-% $CO_2$ | 0,1 Vol.-% $SO_2$ |

besass und eine Temperatur von 850° C aufwies. Der Staubgehalt (Eisenoxid und Asche) lag bei 25 g/m³ und der Russgehalt bei 12 g/m³$_N$.

Das Prozessabgas wurde dem Wirbelschichtreaktor 1 durch Leitung 2 (venturidüsenähnliche Eintragsvorrichtung) zugeführt. Gleichzeitig gelangte über Leitung 13 ein Abgas der Brennzone einer Pelletbrennmaschine 14 in einer Menge von 40 000 m³$_N$/h mit 380° C in den Wirbelschichtreaktor 1. Die Zusammensetzung dieses Verbrennungsgases war

|  |  |
|---|---|
| 19,0 Vol.-% $O_2$ | 2,5 Vol.-% $H_2O$ |
| 1,5 Vol.-% $CO_2$ | 77,0 Vol.-% $N_2$ |

Der $SO_2$-Gehalt des Gases lag bei 0,05 Vol.-%.

Als Gasreinigungsmittel diente Kalkstein einer Körnung von d$_p$ 50 = 100 µm in einer Menge von

1100 kg/h. Damit lag das stöchiometrische Angebot bei 2,5, berechnet als Ca:S.

Um die Temperatur im Wirbelschichtreaktor 1 auf 850°C zu halten, wurden über die Leitung 7, den Wirbelschichtkühler 8 und die Leitung 10 50 t/h Feststoff geführt, der im Wirbelschichtkühler 8 von 850 auf 400°C gekühlt worden war. Gleichzeitig wurden in den Kühlregistern 9 9,6 t/h Sattdampf von 30 bar (Speisewassereintragstemperatur 105°C) erzeugt.

Aufgrund der gewählten Bedingungen stellten sich eine Feststoffumlaufrate im Zirkulationssystem von Wirbelschichtreaktor 1, Rückführzyklon 4 und Rückführleitung 6 von 220, eine mittlere Suspensionsdichte im Wirbelschichtreaktor 1 von 1 kg/m³ und eine Gasgeschwindigkeit im Wirbelschichtreaktor 1 von 6 m/s ein.

Im Ergebnis entstand ein Rauchgas mit der Zusammensetzung

4,8 Vol.-% $O_2$
70,0 Vol.-% $N_2$
15,1 Vol.-% $CO_2$
10,1 Vol.-% $H_2O$

in einer Menge von 105 000 m³$_N$/h.

Der $SO_2$-Restgehalt im Rauchgas betrug 95 mg/m³$_N$, was einer Schwefelentfernung von 97% entspricht.

## Patentansprüche

1. Verfahren zur Nachverbrennung und Reinigung von brennbare Bestandteile enthaltenden Prozessabgasen, dadurch gekennzeichnet, dass man die Prozessabgase und die zur Verbrennung erforderlichen sauerstoffhaltigen Gase getrennt in den Wirbelschichtreaktor (1) einer zirkulierenden Wirbelschicht einleitet, darin bei einer Gasgeschwindigkeit von 2 bis 10 m/s (Leerrohrgeschwindigkeit) in Gegenwart von Gasreinigungsmittel enthaltendem Feststoff, der eine Teilchengrösse d$_p$ 50 von 30 bis 200 µm aufweist, und unter Einstellung einer mittleren Suspensionsdichte von 0,1 bis 10 kg/m³ und einer Temperatur von 700 bis 1100°C verbrennt und gleichzeitig reinigt, ein stöchiometrisches Verhältnis von Gasreinigungsmittel zu im Prozessabgas enthaltenem oder infolge Verbrennung gebildetem Schadstoff von 1,2 bis 3,0 (berechnet als Ca:S) einstellt und die mit den Gasen aus dem Wirbelschichtreaktor (1) ausgetragenen Feststoffe derart in den Wirbelschichtreaktor (1) zurückleitet, dass innerhalb der zirkulierenden Wirbelschicht der stündliche Feststoffumlauf mindestens das 5fache des im Wirbelschichtreaktor (1) befindlichen Feststoffgewichtes ausmacht.

2. Verfahren nach Anspruch 1, dadurch gekennzeichnet, dass man die Prozessabgase mit einer Gasgeschwindigkeit im Wirbelschichtreaktor (1) von 4 bis 8 m/s verbrennt und reinigt.

3. Verfahren nach Anspruch 1 oder 2, dadurch gekennzeichnet, dass man im Wirbelschichtreaktor (1) die mittlere Suspensionsdichte auf 0,2 bis 2 kg/m³ einstellt.

4. Verfahren nach Anspruch 1, 2 oder 3, dadurch gekennzeichnet, dass man die mit den Gasen aus dem Wirbelschichtreaktor (1) ausgetragenen Feststoffe derart in den Wirbelschichtreaktor (1) zurückleitet, dass innerhalb der zirkulierenden Wirbelschicht der stündliche Feststoffumlauf mindestens das Hundertfache des im Wirbelschichtreaktor (1) befindlichen Feststoffgewichtes ausmacht.

5. Verfahren nach einem oder mehreren der Ansprüche 1 bis 4, dadurch gekennzeichnet, dass man in der zirkulierenden Wirbelschicht eine Temperatur von 800 bis 1050°C einstellt.

6. Verfahren nach einem oder mehreren der Ansprüche 1 bis 5, dadurch gekennzeichnet, dass man die Temperatur im Wirbelschichtreaktor (1) durch Eintrag von in einem Wirbelschichtkühler (8) gekühltem Feststoff einstellt.

7. Verfahren nach einem oder mehreren der Ansprüche 1 bis 6, dadurch gekennzeichnet, dass man als sauerstoffhaltiges Gas Abgas einer Pelletbrennmaschine (14) oder eines Sinterbandes, vorzugsweise aus einem Bereich mit hoher $SO_2$-Konzentration, einsetzt.

8. Verfahren nach einem oder mehreren der Ansprüche 1 bis 7, dadurch gekennzeichnet, dass man die Menge des sauerstoffhaltigen Gases derart bemisst, dass ein Rauchgas mit einem Sauerstoffgehalt von 2 bis 10 Vol.-% entsteht.

## Claims

1. A process of afterburning and purifying process exhaust gases which contain combustible constituents, characterized in that the process exhaust gases and the oxygen-containing gases required for a combustion are separately supplied to a fluidized bed reactor (1) of a circulating fluidized bed, in which a combustion and purification of the exhaust gases are effected at a gas velocity of 2 to 10 m/s (empty pipe velocity) in the presence of solids which contain a gas-purifying agent and have a particle size d$_p$ 50 of 30 to 200 µm and with an adjusted mean suspension density of 0.1 to 10 kg/m³ and at a temperature of 700 to 1,100°C, a stoichiometric ratio of 1.2 to 3.0 (calculated as Ca:S) of gas-purifying agent to pollutant contained in the exhaust gas from the process or formed by the combustion is adjusted, and the solids entrained by the gases from the fluidized bed reactor (1) are recycled to the fluidized bed reactor (1) in such a manner that the quantity of solids circulated per hour in the circulating fluidized bed is at least 5 times the weight of solids contained in the fluidized bed reactor (1).

2. A process according to Claim 1, characterized in that the process exhaust gases are burnt and purified in the fluidized bed reactor at a gas velocity of 4 to 8 m/s.

3. A process according to one of Claims 1 or 2, characterized in that a mean suspension density of 0.2 to 2 kg/m³ is adjusted in the fluidized bed reactor (1).

4. A process according to one of Claims 1, 2 or 3, characterized in that the solids which have been entrained in the gases leaving the fluidized bed reactor (1) are recycled to the fluidized bed reactor (1) in such a manner that the quantity of solids circulated per hour in the circulating fluidized bed is at least 100 times the weight of the solids contained in the fluidized bed reactor (1).

5. A process according to one or more of Claims 1 to 4, characterized in that a temperature of 800 to 1,050°C is adjusted in the circulating fluidized bed.

6. A process according to one or more of Claims 1 to 5, characterized in that the temperature in the fluidized bed reactor (1) is adjusted by a supply of solids which have been cooled in a fluidized bed cooler (8).

7. A process according to one or more of Claims 1 to 6, characterized in that exhaust gas from a pellet-firing machine (14) or a sintering plant, preferably from a region having a high $SO_2$ concentration, is used as an oxygen-containing gas.

8. A process according to one or more of Claims 1 to 7, characterized in that the oxygen-containing gas is supplied at such a rate that the resulting flue gas has an oxygen content of 2 to 10% by volume.

## Revendications

1. Procédé de postcombustion et d'épuration de gaz résiduaires de processus contenant des constituants combustibles, caractérisé en ce qu'il consiste à envoyer séparément des gaz résiduaires de processus et les gaz contenant de l'oxygène nécessaires à la combustion dans le réacteur à lit fluidisé (1) d'un lit fluidisé circulant, à les y brûler et en même temps à les y épurer avec une vitesse des gaz de 2 à 10 m/s (vitesse en conduit vide), en présence d'une matière solide contenant un agent d'épuration de gaz et présentant une granulométrie $d_p$ 50 de 30 à 200 µm, tout en établissant une masse volumique moyenne de suspension de 0,1 à 10 kg/m³ et une température de 700 à 1100°C, à établir un rapport stœchiométrique de 1,2 à 3,0 (exprimé en Ca:S) entre l'agent d'épuration des gaz et la substance polluante contenue dans le gaz résiduaire du processus ou formée en raison de la combustion, et à retourner au réacteur à lit fluidisé les matières solides soutirées du réacteur à lit fluidisé (1) avec les gaz de manière qu'à l'intérieur du lit fluidisé circulant la circulation de matières solides à l'heure représente au moins 5 fois le poids de matières solides se trouvant dans le réacteur à lit fluidisé (1).

2. Procédé suivant la revendication 1, caractérisé en ce qu'il consiste à brûler et à épurer les gaz résiduaires de processus avec une vitesse des gaz dans le réacteur à lit fluidisé (1) de 4 à 8 m/s.

3. Procédé suivant l'une des revendications 1 ou 2, caractérisé en ce qu'il consiste à régler la masse volumique moyenne de suspension dans le réacteur à lit fluidisé (1) entre 0,2 et 2 kg/m³.

4. Procédé suivant l'une des revendications 1, 2 ou 3, caractérisé en ce qu'il consiste à retourner les matières solides, soutirées du réacteur à lit fluidisé (1) avec les gaz, au réacteur à lit fluidisé (1), de manière qu'à l'intérieur du lit fluidisé circulant la circulation horaire de matières solides représente au moins 100 fois le poids de matières solides se trouvant dans le réacteur à lit fluidisé (1).

5. Procédé suivant l'une ou plusieurs des revendications 1 à 4, caractérisé en ce qu'il consiste à régler la température dans le lit fluidisé circulant entre 800 et 1050°C.

6. Procédé suivant l'une ou plusieurs des revendications 1 à 5, caractérisé en ce qu'il consiste à régler la température dans le réacteur à lit fluidisé (1) par introduction de matière solide refroidie dans un dispositif de refroidissement à lit fluidisé (8).

7. Procédé suivant l'une ou plusieurs des revendications 1 à 6, caractérisé en ce qu'il consiste à mettre en œuvre, comme gaz contenant de l'oxygène, du gaz résiduaire d'une machine de cuisson de boulettes (14) ou d'une bande d'agglomération par frittage, provenant de préférence d'une zone ayant une concentration élevée de $SO_2$.

8. Procédé suivant l'une ou plusieurs des revendications 1 à 7, caractérisé en ce qu'il consiste à proportionner la quantité de gaz contenant de l'oxygène, de manière à créer un gaz de carneau ayant une teneur en oxygène de 2 à 10% en volume.

F i g.1

Fig.2